# FASCICULE DE BREVET EUROPEEN

(11) **EP 3 969 967 B1**
(45) Date de publication et mention de la délivrance du brevet: **11.11.2026**
(21) Numéro de dépôt: 20737230.1
(22) Date de dépôt: 13.05.2020
(51) Int. Cl.: G05B 13/04, B64F 5/60, B64D 33/00, B64D 45/00

(54) **RECALAGE DE MODÈLE DANS UNE TURBOMACHINE**
MODELLRÜCKSETZUNG IN EINEM TURBINENTRIEBWERK
MODEL RESETTING IN A TURBINE ENGINE

(30) Priorité: 13.05.2019 FR 1904979; 13.05.2019 FR 1904976
(43) Date de publication de la demande: 23.03.2022
(73) Titulaire: SAFRAN AIRCRAFT ENGINES, 75015 Paris (FR)
(72) Inventeur: AULNETTE, Rudy, Charles, André, 77550 MOISSY-CRAMAYEL (FR); DJELASSI, Cedrik, 77550 MOISSY-CRAMAYEL (FR); EBURDERIE, Emmanuel, Mickaël, 77550 MOISSY-CRAMAYEL (FR); EL KONNADI, Mehdy, 77550 MOISSY-CRAMAYEL (FR)
(74) Mandataire: Regimbeau
(86) Numéro de dépôt international: PCT/FR2020/050793
(87) Numéro de publication internationale: WO 2020/229778

(56) Documents cités:
- EP-A2- 1 298 512
- DE-B4- 19 524 914
- FR-A1- 3 007 152
- US-A1- 2013 073 170

## Description

### DOMAINE DE L'INVENTION

La présente invention concerne la mise à jour de modèles prédictifs dans le cadre d'une turbomachine.

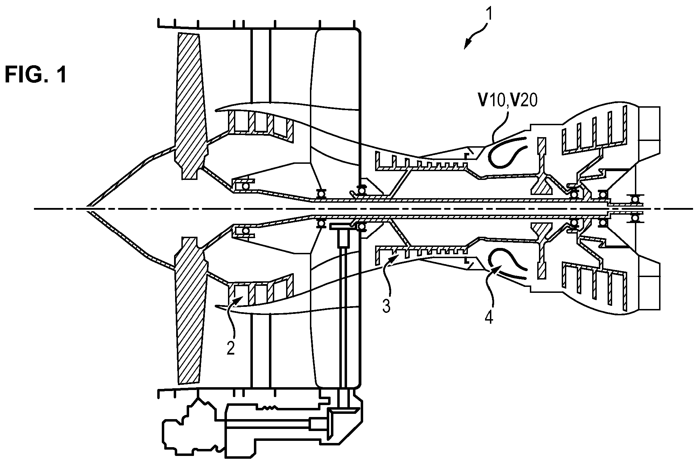

En propos liminaire, plusieurs définitions sont données. Comme illustré en **figure 1****,** on se place dans le cadre d'une turbomachine 1 comprenant deux compresseurs 2, 3 successifs (compresseur basse pression 2 et haute pression 3) suivi d'une chambre de combustion 4. Ces définitions sont applicables pour toute la demande.

La Ps3 est la pression statique mesurée ou calculée dans le plan en amont de la chambre de combustion).

Xn12R est le régime du compresseur basse pression 2, réduit sur la température dudit compresseur T12 (pour s'affranchir des variations de température), exprimé en tours par minute.

PCN12R (ou N1 dans le cas d'un entrainement direct ou «*direct drive*» dans la terminologie anglo-saxonne) est le régime du compresseur basse pression 2, réduit sur la T12 (pour s'affranchir des variations de température), exprimé en pourcentage du régime basse pression maximum.

Xn25R est le régime du compresseur haute pression 3, réduit sur la T25 (pour s'affranchir des variations de température), exprimé en tours par minute.

PCN25R (ou N2) est le régime du compresseur haute pression 3, réduit sur la température dudit compresseur T25 (pour s'affranchir des variations de température), exprimé en pourcentage du régime haute pression maximum.

PT2 est la pression totale extérieure (fournie par l'avion).

P25 est la pression statique modélisée dans le compresseur haute pression.

Un modèle est une loi mathématique décrivant l'évolution d'une grandeur physique (paramètre) en fonction d'un ou plusieurs variables physiques.

### ETAT DE LA TECHNIQUE

En exploitation, il arrive que des turbomachines subissent des fausses détections de pompages (décrochage des aubes d'un des deux compresseurs) en phase de croisière. Ces évènements ont un fort impact opérationnel (endoscopie du moteur) et sont dangereux.

Dans ces deux cas, il a été observé au moment où les évènements ont eu lieu une panne d'écart entre les deux voies Ps3, c'est-à-dire entre les deux voies d'acquisition de la pression statique en amont de la chambre de combustion.

L'impact des fausses détections de pompage a un impact opérationnel important dans le sens où l'avion est immobilisé tant que le moteur n'a pas été endoscopé pour vérifier s'il a subi des dommages

La ligne d'acquisition Ps3 est parfois constituée d'une canalisation qui prélève la pression en amont de la chambre de combustion 4 et de deux capteurs de pression situés directement dans le calculateur de l'avion (FADEC, pour *full authority digital engine controll*).

La mesure de Ps3 est effectuée grâce à deux capteurs indépendants. Afin de consolider les informations issues des deux capteurs, une logique de sélection entre les deux capteurs a été mise en place. On suppose ici que les capteurs relèvent des mesures valides (pas de panne électrique et mesure contenue dans une plage de mesures physiquement vraisemblables), et que les deux capteurs relèvent des mesures en écart l'une par rapport à l'autre. Cette configuration provoque une panne d'écart, mais il est en l'état impossible de voter pour l'une ou l'autre des mesures, ne sachant laquelle est la plus proche de la valeur de Ps3 réelle.

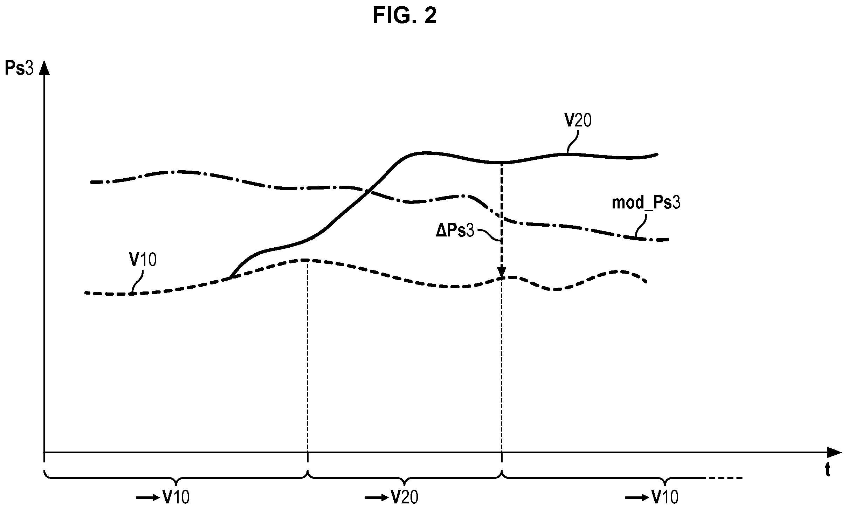

Pour pallier ce problème, un modèle de Ps3 basé sur des lois thermodynamiques est calculé. Ce modèle permet théoriquement de lever le doute en fournissant une troisième grandeur (redondance analytique), indépendante des mesures de Ps3, qui permettra de voter pour l'un ou l'autre des relevés via la logique de sélection. La **figure 2** illustre ce principe, avec les deux voies d'acquisition V10, V20, le modèle mod_ Ps3 et la bascule qui se fait lorsque la voie V10 redevient plus proche du modèle mod_Ps3 que la voie V20 qui avait divergé de la voie V10 auparavant. La bascule entraine au niveau du calculateur l'observation d'une variation de pression ΔPs3 importante

Néanmoins, on observe en pratique des valeurs du modèle assez éloignées de la valeur de Ps3 réelle. Cela peut conduire à un arbitrage de voie erroné. Le Déposant s'est aperçu, après des études, que la fausse détection de pompage était due à un brusque changement de sélection de Ps3 : comme les deux mesures de Ps3 étaient en écart, la voie sélectionnée est passée de la mesure la plus forte en Ps3 à la mesure la plus faible en un pas de calcul puisque le modèle était initialement plus proche de la Ps3 la plus importante pour ensuite se rapprocher de la Ps3 la plus faible. C'est ce faux saut ΔPs3 d'au moins 15% de valeur relative qui peut déclencher une fausse détection de pompage alors que la pression n'a pas chuté réellement.

Il existe donc un besoin de se prémunir contre ce genre d'évènement notamment en améliorant la gestion de l'arbitrage, en particulier au sujet de la pression Ps3, mais pour tout autre paramètre.

Plus généralement, il existe un besoin de mieux traiter les modèles thermodynamiques, afin qu'ils reflètent davantage la réalité, que ce soit pour la Ps3 ou d'autres paramètres.

De plus, diverses améliorations ou utilisations du modèle thermodynamique pourraient être apportées pour améliorer la rapidité, l'efficacité et la pertinence des modèles thermodynamiques.

Il est également connu les demandes de brevet références US 2014/326213 A1, EP 2 434 127 A2, US 2019/080523 A1 et US 2017/218854 A1.

On connait par ailleurs déjà par le document DE 195.24.914.B4, dans des applications autres que celles des turbomachines ou des aéronefs, un procédé de recalage d'un modèle de paramètre de fonctionnement. US 2013/073170 A1 et FR 3 007 152 A1 divulguent un procédé de recalage d'un modèle de turbomachine.

### EXPOSE DE L'INVENTION

Un but de l'invention est de proposer des solutions aux problèmes mentionnés.

Il est à cet effet proposé un procédé de recalage d'un modèle thermodynamique de paramètre de fonctionnement et d'analyse de vieillissement de turbomachine ou d'aéronef.

Dans un mode de mise en œuvre, le recalage intervient sur un modèle de pression statique en amont de chambre de combustion, dit « modèle de Ps3», dans une turbomachine comprenant un compresseur, le modèle de Ps3 étant utilisé pour arbitrer entre deux voies d'acquisition de la pression statique en amont de la chambre de combustion, dite « pression Ps3», les deux voies d'acquisition faisant intervenir deux capteurs,

le procédé utilisant un modèle de Ps3 stocké dans une mémoire, le modèle exprimant la pression Ps3 en fonction au moins du régime du compresseur, dit « régime PCN25R » et comprenant les étapes suivantes :
E1 : mesure d'une valeur de la pression Ps3, par un des deux capteurs.
E2 : recalage du modèle de Ps3 à l'aide de la mesure de la valeur de Ps3.

Dans un mode de réalisation, le modèle de Ps3 est un modèle de Ps3 sur la pression de compresseur, dite « pression P25 », le modèle étant dit « modèle PS3/P25 ».

Dans un mode de réalisation, le modèle Ps3/P25 est exprimé en fonction du régime de compresseur, réduit sur sa température, dite « température T25 », dit « régime PCN25R » ou « régime Xn25R ».

Dans un mode de réalisation, le recalage est effectué sur le modèle de Ps3/P25 en fonction du régime PCN25R.

Dans un mode de réalisation, le compresseur est un compresseur haute-pression, lorsque la turbomachine comprend en outre un compresseur basse-pression en amont du compresseur haute-pression.

Dans un mode de réalisation, le modèle Ps3 est défini par segments en fonction et l'étape de recalage consiste à recaler chaque segment.

Dans un mode de réalisation, dans chaque segment le modèle PS3 est linéaire.

Dans un mode de réalisation, l'étape de recalage par segment est effectuée à l'aide d'un correcteur, par exemple un correcteur intégral.

Dans un mode de réalisation, le modèle PS3 est exprimé en outre en fonction du régime de compresseur basse-pression, réduit sur sa température, dite « température T12 », dit « régime PCN12R ».

Dans un mode de réalisation, le modèle PS3 est exprimé en outre en fonction de la pression totale extérieure, dite « pression T2 ».

Dans un mode de réalisation, le modèle PS3 est défini par plan et l'étape de recalage consiste à recaler chaque plan.

Dans un mode de réalisation, le modèle de PS3 à recaler est choisi en fonction du niveau de prélèvement d'air avion dans les compresseurs et la mémoire stocke une pluralité de modèles PS3 exprimés en fonction du prélèvement d'air avion.

Le modèle peut être défini comme une loi par segment indiquant la valeur dudit paramètre en fonction d'une variable, ou étant défini comme une loi par plan indiquant la valeur dudit paramètre en fonction de deux variables de fonctionnement,
ladite loi étant affine sur chaque segment ou étant affine sur chaque plan, le modèle de paramètre étant stocké dans une mémoire.

Les paramètres de fonctionnement et les variables sont par exemple relatif à une température ou une pression, ou encore à un régime de compresseur (typiquement les régimes Xn12 et Xn25 du corps basse pression et du corps haute pression. Plus généralement, ils peuvent être tout paramètre de fonctionnement pour lequel on dispose d'une mesure et d'un modèle permettant une redondance analytique

Le procédé de recalage comprend les étapes suivantes :
- obtention d'une valeur du paramètre,
- calcul d'une erreur par comparaison de ladite valeur du paramètre avec la valeur correspondante du modèle, ladite valeur du modèle appartenant à un des segments ou des plans du modèle,
- application d'un correcteur en minimisant ladite erreur pour déterminer une correction,
- recalage du segment du modèle ou du plan du modèle à l'aide de la correction, pour repositionner ledit segment ou plan et obtenir ainsi un modèle recalé du paramètre physique.

Dans un mode de réalisation, l'étape d'obtention de la valeur du paramètre se fait par :
- une mesure directe dudit paramètre à l'aide d'un capteur, ou
- une mesure d'un paramètre tiers dont dépend ledit paramètre, ou
- une simulation.

Dans un mode de réalisation, le correcteur est un correcteur PID ou un correcteur intégral.

Dans un mode de réalisation, lorsque le modèle est une loi par segment, le recalage se fait en figeant un point du segment et en déplaçant un autre point du segment à l'aide de la correction, les deux points étant préférablement des extrémités du segment.

Dans un mode de réalisation, lorsque le modèle est une loi par segment, le recalage se fait en ne gardant aucun point du segment fixe, par exemple en déplaçant les deux extrémités du segment à l'aide de la correction.

Dans un mode de réalisation, le déplacement des extrémités du segment se fait en fonction de leur distance respective avec ladite valeur correspondante du modèle.

Dans un mode de réalisation, la répartition de la correction à appliquer une extrémité du segment est égal au ratio de la distance de la valeur correspondante du modèle à l'autre extrémité du segment, sur la longueur du segment.

Dans un mode de réalisation, l'étape de recalage du segment du modèle comprend une interpolation linéaire entre deux points recalés.

Dans un mode de réalisation, lorsque le modèle est une loi par plan, le plan a la forme d'un rectangle qui est découpé en triangles, et le recalage se fait en figeant un ou deux sommets du triangle et en déplaçant les deux derniers ou le dernier sommet du triangle à l'aide de la correction.

Dans un mode de réalisation, lorsque le modèle est une loi par plan, le plan est découpé en triangles, et le recalage se fait en déplaçant les trois sommets du triangle.

Dans un mode de réalisation, le déplacement de chaque sommet du triangle se fait en fonction de l'aire du sous-triangle défini par les deux autres sommets et ladite valeur correspondant du modèle.

Dans un mode de réalisation, la répartition de la correction à appliquer à un sommet du triangle est égal au ratio de l'aire du sous-triangle défini par les autres sommets et ladite valeur correspondante du modèle, sur l'aire du triangle.

Dans un mode de réalisation, l'étape de recalage du triangle comprend une interpolation linéaire à partir des points recalés.

Dans un mode de réalisation, le paramètre est la pression Ps3 ou la pression Ps3 divisée par la pression P25 et dans lequel :
- la variable est, lorsque le modèle est une loi par segment, le régime PCN25R et
- les variables sont, lorsque le modèle est une loi par plan, la PCN25R et la PCN12R, ou la PCN25R et la PT2.

Dans un mode de réalisation, le modèle à recaler est choisi en fonction d'une variable, la mémoire stocke une pluralité de modèles exprimés en fonction du prélèvement d'air avion, la variable pouvant être le niveau de prélèvement d'air avion dans les compresseurs.

Dans un mode de réalisation, les gains du correcteur sont différents pour différents segments ou plans du modèle.

Il est aussi proposé un procédé d'analyse de vieillissement d'une turbomachine, le procédé consistant à mettre en oeuvre les étapes suivantes :
- F1 : Mise en oeuvre d'un procédé de recalage tel que décrit précédemment,
- F2 : Sauvegarder le modèle recalé dans une mémoire non-volatile,
   les étapes F1 et F2 étant répétées au moins deux fois, et préférablement plus,
- F3 : Comparer les différents modèles recalés pour en déduire une évolution de l'état de la turbomachine.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique une turbomachine.
La figure 2 illustre un procédé d'arbitrage entre deux voies d'acquisition à l'aide d'un modèle thermodynamique.
La figure 3 illustre graphiquement un procédé de recalage de la pression Ps3.
La figure 4 illustre par un schéma-bloc un procédé de recalage d'un modèle de paramètre, tel que la pression Ps3.
La figure 5 illustre un correcteur.
Les figures 6a et 6b illustrent des procédés de recalage d'un modèle 2D par segment.
La figure 7a illustre, pour un segment, un procédé de recalage d'un modèle 2D en segment par pondération.
La figure 7b illustre, pour plusieurs segments, un procédé de recalage d'un modèle 2D en segment par pondération.
La figure 8 illustre un modèle 3D par plan.
La figure 9 illustre par un schéma-bloc un procédé de recalage d'un modèle 3D de paramètre, tel que la pression Ps3, en fonction des pressions PCN12R et PCN25R.
La figure 10a illustre, pour un plan, un procédé de recalage d'un modèle 3D en segment par pondération.
La figure 10b illustre le choix d'un triangle parmi le rectangle formant un plan du modèle 3D.
La figure 10c illustre le choix de la pondération pour un triangle parmi le rectangle formant un plan du modèle 3D.
La figure 11 illustre par un schéma-bloc une sélection de modèle en fonction d'une variable, préalablement au recalage du modèle.
La figure 12 illustre un procédé d'analyse de vieillissement de turbomachine.

### DESCRIPTION DETAILLEE DE L'INVENTION

Le contexte et les définitions données en introduction sont repris ici.

Dans un premier temps, un procédé de recalage de modèle de pression statique en amont de chambre de combustion va être décrit. Cette pression sera appelée pression Ps3 et ce modèle sera appelé « modèle de Ps3 » et référencé mod_Ps3. Il s'agit d'un modèle thermodynamique.

Le modèle de Ps3 a notamment pour but final de permettre d'arbitrer entre deux voies d'acquisition V10, V20, redondantes, dont la fonction est de mesurer la pression Ps3. Chaque voie d'acquisition V10, V20 comprend un capteur 10, 20. Le capteur 10, 20 est standard et ne sera pas décrit ici.

On décrira par la suite un procédé d'arbitrage entre les deux voies d'acquisition V10, V20.

Une unité de calcul 100 est prévue, qui comprend un processeur 110 et une mémoire 120. L'unité de calcul 100 peut être un FADEC (« *full authority digital engine control* ») ou bien être un composant distinct, positionné au plus près des voies d'acquisition V10, V20 pour davantage de réactivité.

La mémoire 120 stocke un modèle mod_Ps3, qui permet d'obtenir la valeur de la pression PS3 en fonction d'au moins une variable Var, qui est le régime PCN25R (régime compresseur haute pression) : le modèle mod_ Ps3 est alors écrit sous la forme mod_Ps3(PCN25R). En pratique, le modèle mod_Ps3 fait intervenir plusieurs sous-modèles, comme notamment le modèle de Ps3 sur la pression de compresseur haute-pression P25 (ce modèle est appelé mod_Ps3/P25) et le modèle mod_Ps3/P25 est lui-même exprimé en fonction du régime du compresseur haute-pression PCN25R réduit sur sa température T25. Ce modèle est alors écrit sous la forme mod_Ps3/P25(PCN25R/T25).

Il suffit ensuite de multiplier la valeur de Ps3/P25 par P25 pour obtenir la valeur de Ps3.

Plutôt que de recaler directement le modèle mod_Ps3, il est ainsi préférable de recaler le modèle mod_Ps3/P25. La dénomination de « modèle de Ps3 », sous la forme mod_Ps3, inclut les modèles n'exprimant pas directement la pression Ps3 mais permettant de l'obtenir par la suite, tel que le modèle mod_Ps3/P25.

Dans une première étape E1, une des deux voies d'acquisition V10, V20, à l'aide de son capteur 10, 20, mesure une valeur Val_Ps3 de la pression Ps3 sur la turbomachine (pour une valeur réelle de la grandeur physique qui est utilisée comme variable, c'est-à-dire PCN25R). A ce stade, on suppose que les deux voies d'acquisition V10, V20 sont saines et que les deux capteurs 10, 20 donnent une mesure correcte. En d'autres termes, il n'y a pas de panne de capteurs 10, 20 ou d'écart au-delà d'un seuil prédéterminé entre les deux mesures.

Cette mesure d'une valeur Val_Ps3 de la pression Ps3 est ensuite envoyée à l'unité de calcul 100.

Une étape E2 de conversion ou de traitement des données peut être mise en œuvre : par exemple, Val_Ps3 est une valeur de pression statique Ps3, alors que le modèle mod_Ps3/P25 utilise la pression Ps3 réduite sur la P25 : il faut donc diviser la valeur de la pression statique par P25 pour obtenir la valeur Val_Ps3/P25.

Ensuite, dans une étape E3, l'unité de calcul 100 recale le modèle de Ps3 stocké dans sa mémoire 120 à l'aide de ladite mesure de la valeur de la pression Ps3. Par recaler, on entend qu'il existe au moins un point du modèle mod_Ps3 (en pratique une pluralité, voire une infinité, si le modèle est continu) dont l'ordonnée a été déplacée (à abscisse constante donc). On note Rmod_PS3/P25 le modèle recalé. Par la suite, on simplifiera l'écriture en gardant mod_PS3/P25 qui désigne un modèle avant et après recalage.

En l'espèce, il existe au moins un point P de la courbe mod_Ps3(Var) dont la valeur Val_mod_Ps3(Var) a changé avant et après le recalage, pour une valeur de la variable donnée. Dans le mode de réalisation préféré, on travaille avec mod_Ps3/P25(PCN25R) et Val_mod_Ps3/P25(PCN25R).

On définit enfin une étape E4 de stockage du modèle de Ps3 recalé dans la mémoire 120. Dans un mode de réalisation, le modèle recalé mod_Ps3 (en l'occurrence mod_Ps3/P25) remplace en supprimant dans la mémoire 120 le modèle précédent. Dans un autre mode de réalisation, il ne le supprime pas.

Préférablement les étapes E1, E2 et E3 sont répétées à intervalle régulier, de type à chaque pas de calcul. Le pas de calcul correspond à environ 0,015s . Durant un pas de calcul, les deux étapes E1 et E3 peuvent être mises en œuvre ou bien une étape E1 et en parallèle l'étape E3 à l'aide des données issues de l 'étape E1 du pas précédent sont mises en œuvre.

Comme le modèle mod_Ps3 est mis à jour à intervalle régulier, l'arbitrage peut se faire plus rapidement et donc plus correctement, en évitant les sauts ΔPs3 liés au changement de voie V10, V20 intempestif.

Le recalage s'effectue avantageusement à l'aide d'un correcteur 112 qui est intégré dans une boucle de la chaine de contrôle. Ce correcteur sera décrit en détail par la suite.

On définit aussi un procédé d'arbitrage entre deux voies d'acquisitions V10, V20, le procédé d'arbitrage comprenant une étape A1 de mise en œuvre d'un procédé de recalage tel que décrit précédemment et d'une étape A2 de choix de la voie d'acquisition V10, V20, durant laquelle le processeur choisit une voie V10, V20 parmi les deux voies V10, V20. Le choix se fait en fonction de la voie d'acquisition V10, V20 qui est la plus proche du modèle recalé. L'étape A2 est classique et ne sera pas décrite ici.

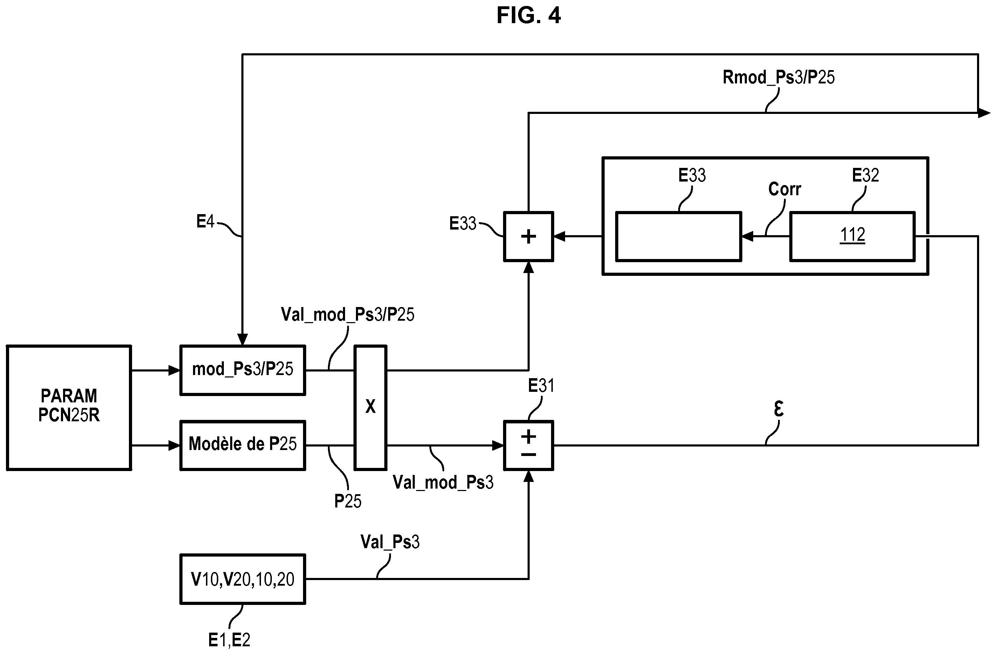

Dans un deuxième temps, un procédé spécifique de recalage d'un modèle mod_PARAM de paramètre de turbomachine ou d'aéronef (par exemple température, pression, en absolu ou en relatif) va être décrit, en référence à la représentation générale de la **figure 4****.** On parlera de « paramètre d'intérêt ». Le modèle est à nouveau un modèle thermodynamique. Le modèle décrit l'évolution du paramètre en fonction d'une ou plusieurs variables Var qui sont elles aussi en réalité des paramètres de turbomachine ou d'aéronef (par exemple température, pression, en absolu ou en relatif). Il est stocké dans la mémoire 120 de l'unité de calcul 100.

Ce procédé est pleinement applicable au procédé de recalage de la pression Ps3 décrit précédemment. On utilisera d'ailleurs la pression Ps3 comme exemple de paramètre PARAM et la pression PCN25R comme variable Var mais le procédé peut être appliqué à tout paramètre physique PARAM d'un aéronef et toute variable Var (par exemple la pression PT2) : par exemple mod_Ps3/P25(PCN25R), mod_Ps3/P25(PCN25R, PCN12R), mod_Ps3/P25(PCN25R, PT2), mod_T25(PCN12R, PT2), mod_Xn25(PCN12R, PT2) où Mach est la vitesse de l'avion, mod_T3(T25), etc.

Un modèle est ici défini comme une loi par segments (dans une configuration dite 2D) ou par plan (dans une configuration dite 3D) indiquant la valeur dudit paramètre d'intérêt en fonction respectivement de une variable Var (2D) ou de deux variables Var1, Var2 (3D). La loi est linéaire respectivement sur chaque segment (ou autrement dit, affine par morceau : c'est-à-dire que son équation est sous la forme générique z=ax+c) ou sur chaque plan (équation sous la forme générique z=ax+by+c).

L'intérêt d'un modèle défini comme une loi par segment (2D) ou par plan (3D) est l'application des principes de l'automatique linéaire. Par exemple, le modèle mod_Ps3/P25(Xn25r) ou mod_Ps3/P25(PCN25R) est non linéaire dans son entièreté.

On se place dans le même cadre que précédemment, avec les deux voies d'acquisition V10, V20.

Dans une étape E1, une valeur Val_PARAM du paramètre d'intérêt PARAM est obtenue. Cette obtention peut se faire dans le cadre de l'étape E1 décrite précédemment, par une mesure d'un capteur 10, 20 d'un ou de plusieurs voies d'acquisitions V10, V20, avec notamment l'acquisition d'un paramètre tiers et on en déduit ledit paramètre intérêt. Alternativement ou complémentairement, le paramètre d'intérêt PARAM peut être obtenu à l'aide d'une simulation.

Les étapes et sous-étapes suivantes sont mises en œuvre par le processeur 110 et la mémoire 120 de l'unité de calcul 100.

Une étape E2 de conversion des données peut être mise en œuvre lorsque le paramètre mesuré ne correspond pas au paramètre du modèle : par exemple, comme expliqué précédemment, Val_Ps3 est une valeur de pression statique Ps3, alors que le modèle mod_Ps3/P25 utilise la pression Ps3 réduite sur la P25. Dans le cas d'un paramètre tiers, ladite unité de calcul 100 calcule une valeur du paramètre d'intérêt Val_PARAM à partir de la valeur du paramètre tiers.

Ensuite, l'étape de recalage E3 est mise en œuvre. Cette étape de recalage E3 comprend plusieurs sous-étapes.

Dans une sous-étape E31, le processeur 110 récupère la valeur Val_mod_PARAM du modèle mod_PARAM qui correspond à la valeur du paramètre d'intérêt Val_PARAM obtenue à l'étape E1.

La valeur du modèle Val_mod_PARAM se trouve donc sur un des segments ou des plans de du modèle mod_PARAM. Cette correspondance peut se faire via la valeur de la variable Var du modèle mod_PARAM : on prend la valeur du modèle Val_mod_PARAM dont l'abscisse correspond à celle de la valeur Val_PARAM du paramètre d'intérêt. Pour cela, il peut être nécessaire d'effectuer en fait deux mesures : une sur le paramètre PARAM et une sur la variable Var, pour avoir un couple de données.

Dans le cas de la pression Ps3, on peut ainsi avoir une mesure de la PCN25R en même temps que la mesure de la Ps3.

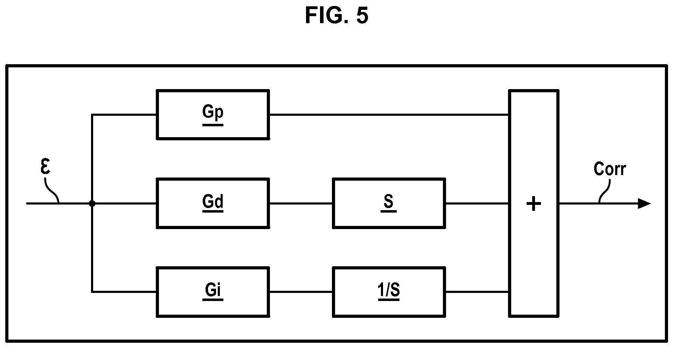

Avec les deux valeurs Val_mod_PARAM et Val_PARAM, la sous-étape E31 comprend le calcul d'une erreur ε, typiquement par soustraction : ε=Val_mod_PARAM-Val_PARAM. Cette erreur ε est illustrée en **figure 5****.**

Dans une sous-étape E32, cette erreur ε est traitée par un correcteur 122, dont le rôle est de minimiser ladite erreur ε. Le correcteur 122 permet de calculer une correction corr qui est un écart à appliquer sur les coordonnées des points de la loi corrigée, obtenue via le correcteur PID, à partir de l'erreur (écart entre la mesure et le modèle) et qui doit être apportée au modèle mod_PARAM. Du fait de la segmentation (segment ou plan) du modèle m_PARAM, le correcteur n'est implémenté que sur le segment ou le plan considéré lors de la mise en œuvre de l'étape E3.

Un correcteur particulier sera décrit par la suite.

Enfin, dans une sous-étape E33, la correction corr est utilisée pour recaler le segment ou le plan du modèle mod_PARAM. Cette étape consiste à recalculer un segment ou un plan, à partir du modèle mod_PARAM précédent et de la correction corr calculée à la sous-étape E32. En particulier, le recalage consiste à déplacer un nombre minimum de points du modèle mod_PARAM dans une sous-étape E331 et à interpoler le reste du modèle entre ces points dans une sous-étape E332 : deux points pour le modèle par segments et trois points pour le modèle par plan.

Plusieurs modes de réalisation du recalage seront décrits par la suite.

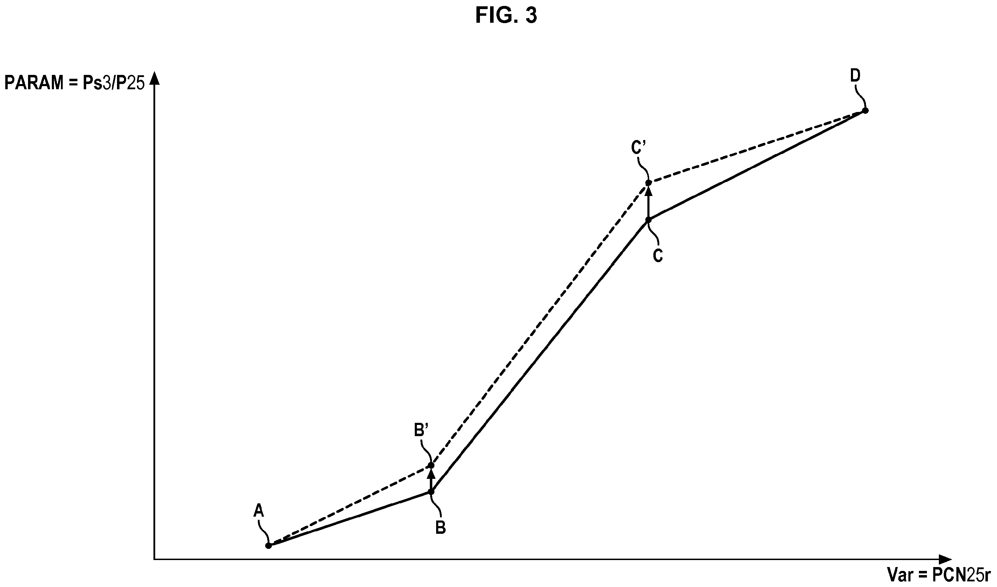

On remarque en outre, par exemple sur la **figure 3****,** que le recalage d'un segment va influer aussi les segments adjacents dans le cas où l'extrémité du segment recalé est déplacée. Une étape d'interpolation des segments adjacents peut en outre être mise en oeuvre.

Le correcteur choisi est un correcteur PID (proportionnel intégral dérivé), illustré en **figure 5****,** où Gp, Gd et Gi sont respectivement le gain du correcteur proportionnel, du correcteur dérivé et du correcteur intégral, S étant la variable dans le domaine fréquentiel (variable de Laplace).

Le correcteur intégral (le I du PID) permet d'introduire une certaine inertie au système rebouclé, ce qui permet d'éviter une hyper-sensibilité aux perturbations et aux points fous, par rapport à un correcteur tout ou rien. Le correcteur intégral permet également de maîtriser la vitesse de recalage, et éviter une dérive instantanée du modèle m(param) vers la moyenne entre les deux voies V10, V20 en cas de dérive d'un des capteurs 10, 20.

Un correcteur proportionnel (le P du PID) et un correcteur dérivé (le D du PID) sont implémentés pour régler plus finement le correcteur 122 en cas de besoin mais ne sont pas utilisés (l'approche empirique a montré que leur contribution est marginale comparée à celle de l'intégrateur qui transcrit naturellement bien mieux le comportement souhaité pour le recalage). On peut ainsi avoir Gp=Gd=0.

Le réglage du correcteur est fait de telle sorte que le modèle mod_PARAM soit recalé suffisamment rapidement pour rendre compte des reconfigurations de la turbomachine (par exemple un changement des niveaux de prélèvements d'air sur le compresseur haute pression).

### Modèle par segment (2D)

On se place ici sur le segment du modèle mod_PARAM qui est concerné par la mesure Val_PARAM effectuée en étape E1. Ce segment a deux points extrémaux, à gauche et à droite, notés A et B.

### Recalage point par point

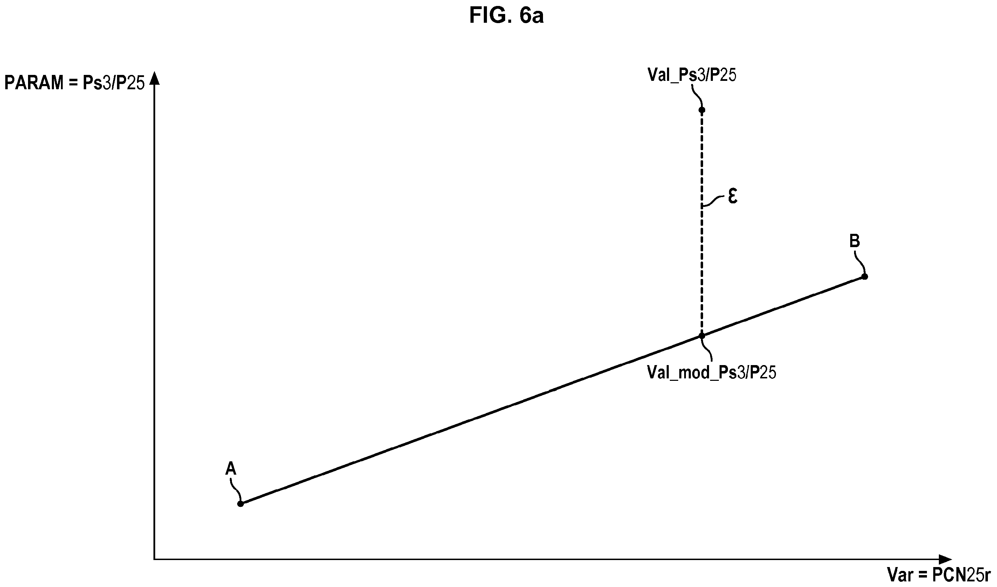

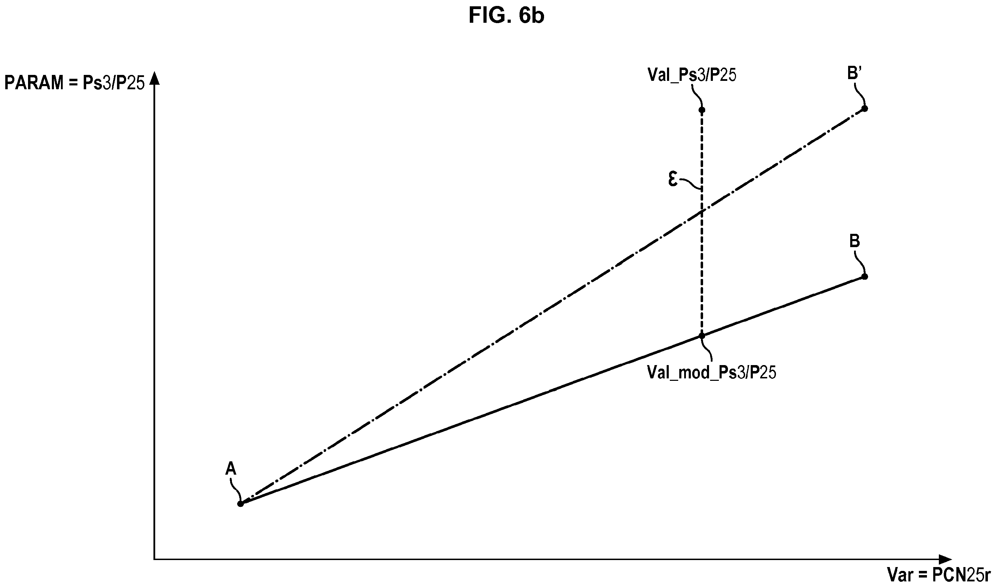

La première solution, illustrée en **figures 6a** **et** **6b****,** consiste à rendre compte de la correction en modifiant les coordonnées d'un seul point du segment, par exemple un des points extrémaux A ou B, tandis que l'autre est figé.

Dans ce cas de figure, la sortie du correcteur 122 impacte directement le point B (respectivement le point A), et le point A (respectivement le point B) reste figé. Cette solution contraint cependant à figer au moins un des points du modèle mod_PARAM pour servir de référence, à partir de laquelle seront impactés les autres segments du modèle mod_PARAM. Ainsi, durant l'étape de recalage E2 et plus précisément durant la sous-étape E231, seul un des deux points extrémaux est déplacé. Ensuite, l'étape d'interpolation E232 est mise en œuvre.

Cette solution est la plus simple et la plus rapide à calculer.

### Recalage pondéré des deux points du segment

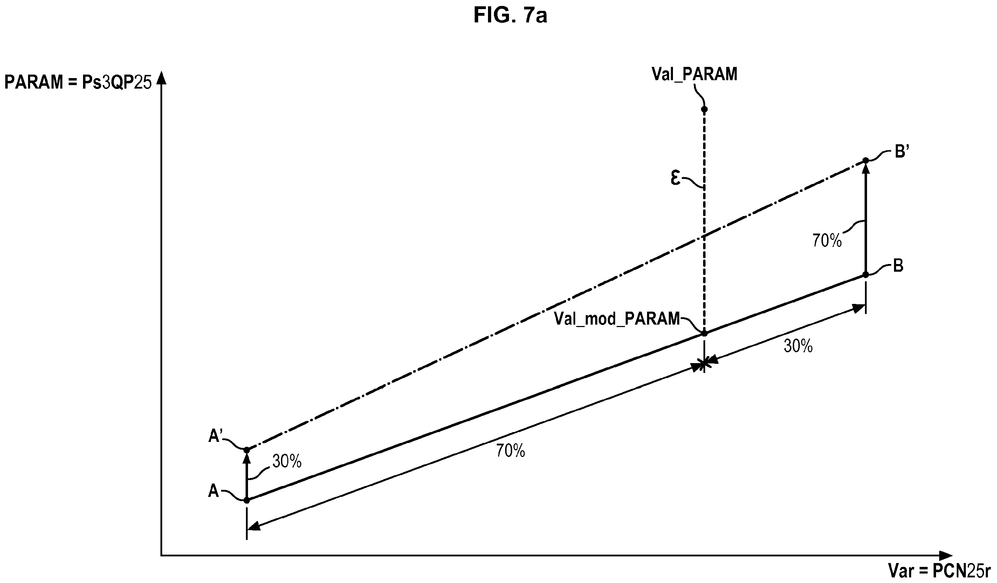

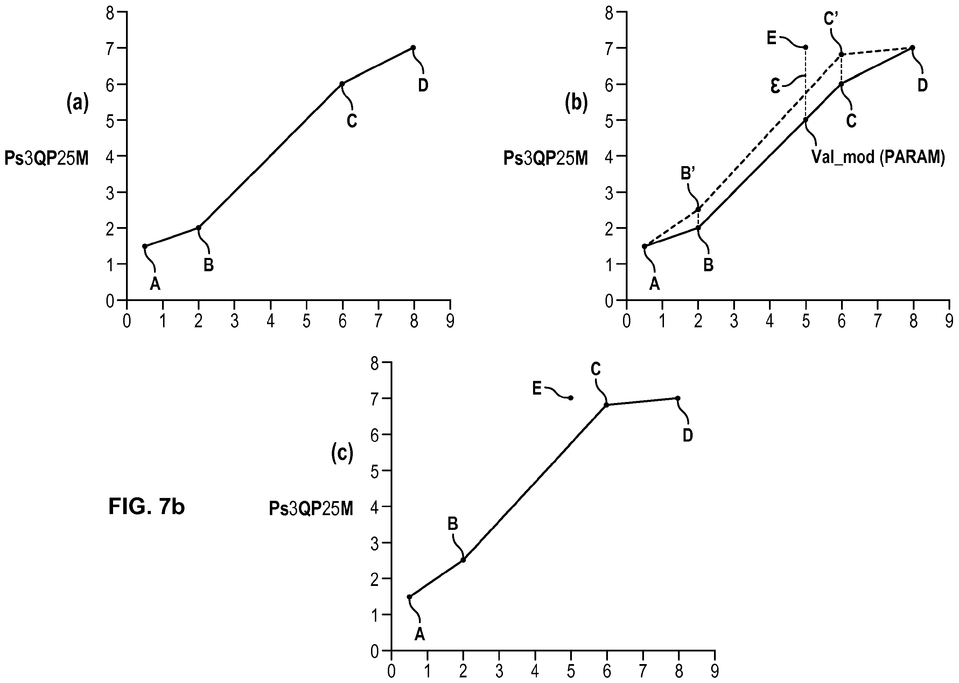

La deuxième solution, illustrée en **figures 7a** **et** **7b****,** consiste à répartir la correction de manière pondérée pour permettre de recaler de manière plus représentative et plus efficace le segment sélectionné. Dans un mode de réalisation avantageux, la pondération est effectuée en fonction de la distance entre valeur Val_PARAM, ici Val_Ps3/P25, et les points A et B du segment.

Les **figures 7a** **et** **7b** illustrent le recalage sur un intervalle et un pas de calcul :
- étape E1 : la valeur mesurée Val_PARAM est obtenue par une ou deux voies d'acquisition V10, V20 ; dans l'exemple, il s'agit de Val_Ps3 ,
- étape E2 (image (a) de la **figure 7b):** la valeur mesurée Val_PARAM est convertie pour être homogène avec le modèle mod_PARAM ; par simplification, on garde la même référence Val_PARAM,
- étape E31 (image (b) de la **figure 7b)** : on mesure ε qui est l'écart entre la valeur mesurée Val_PARAM et valeur du modèle Val_mod_PARAM ; dans l'exemple avec la pression Ps3 : Val_PARAM=Val_PS3/P25, c'est-à-dire la pression Ps3 mesurée divisée par la pression P25 modèle et Val_mod_PARAM = Val_mod_Ps3/P25, la pression Ps3 du modèle recalé (par de précédentes itérations) que l'on divise par P25 modèle,
- étape E32 (image (b) de la **figure 7b)** : l'erreur ε est minimisée via le correcteur 122, en l'intégrant, pour calculer une correction corr,
- étape E331 **(****figure 7a****):** on mesure ensuite (ou avant l'étape E31) la distance du point Val_mod_PARAM, ici Val_mod(Ps3/P25), au point A, qui constitue la borne inférieure de l'intervalle de la variable Var (ici PCN25R) et qui est fonction de la linéarisation du modèle choisie, par rapport à la distance entre les points A et B. Enfin, la correction est distribuée sur l'ordonnée des points A (pour donner A') et B (pour donner B'),
- étape E332 (image (c) de la **figure 7b)** : un nouveau segment est interpolé entre les deux points recalés A' et B'.

Le principe de fonctionnement est de distribuer la correction corr du correcteur 122 d'un intervalle sur les ordonnées des points A et B selon le même principe que précédemment : dans un mode de réalisation, on distribue X% de la correction sur l'ordonnée du point B, avec X le rapport entre la distance du point Val_mod_PARAM au point A sur la distance du point A au point B. On distribue 100-X% de la correction sur l'ordonnée du point A (30% et 70% sur la **figure 7a****).**

Une fois les deux points A' et B' replacés, il suffit dans l'étape E232 d'interpoler le modèle entre ces deux points. La loi étant définie par segment, l'interpolation linéaire (ou affine) est simple.

Alternativement, n'importe quels autres points (distincts) du segment peuvent être déplacés par la correction : il suffit de choisir deux points et l'interpolation linéaire (ou affine) permet de compléter le reste du segment considéré.

Cette méthode permet ainsi un recalage efficace et rapide pour obtenir un modèle recalé mod_PARAM. Néanmoins, ce modèle mod_PARAM ne dépendant que d'une variable Var (PCN25R dans le cas de mod_Ps3), il peut être insuffisant pour certaines situations de vol, notamment lorsque le paramètre d'intérêt PARAM dépend de plusieurs variables Var1, Var2.

### Modèle par plan (3D)

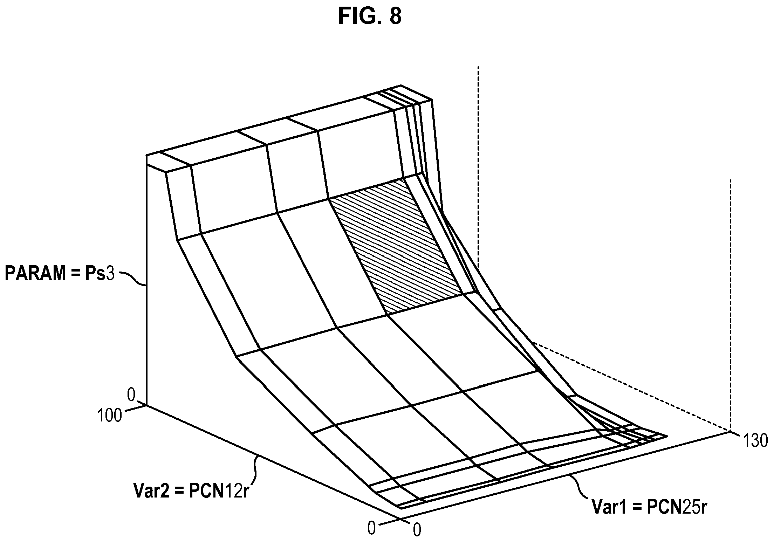

A cet égard, pour tenir compte de plusieurs variables, le modèle mod_PARAM peut être fonction de deux variables (mod_PARAM(Var1, Var2)) et être exprimé sous la forme d'une loi définie par plans, la loi étant linéaire sur chaque plan comme illustré en **figure 8****.**

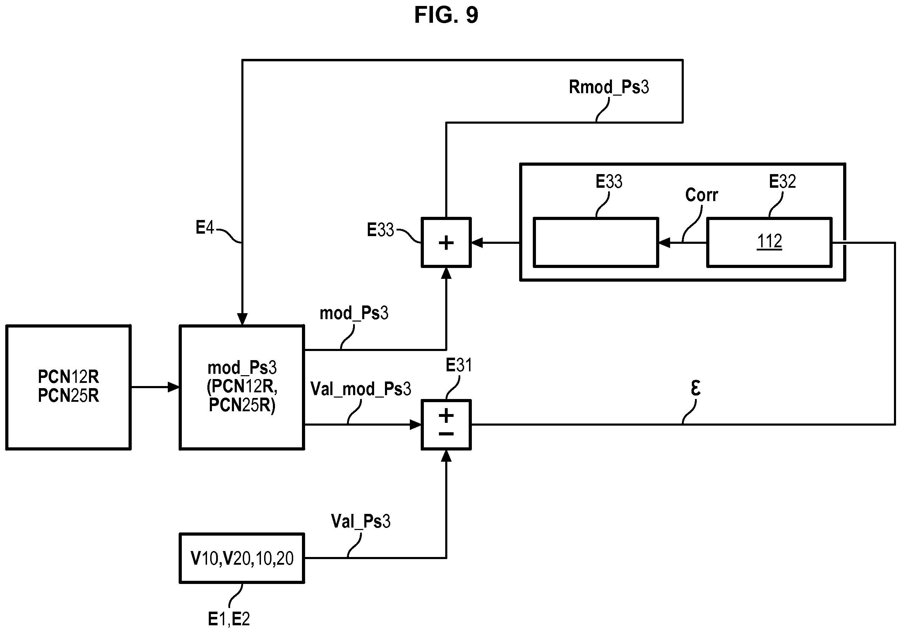

La **figure 9** illustre l'implémentation d'une méthode de recalage dans le cas d'un modèle par plan.

Par exemple, dans le cas de la pression Ps3, lors de l'activation d'un niveau de prélèvement d'air, le modèle mod_Ps3/P25(PCN25R) (c'est-à-dire le modèle Ps3 réduit sur P25 en fonction de PCN25R) est modifié car une partie de l'air compressé par le compresseur haute pression est envoyée dans le système d'air avion). Le correcteur 122 du modèle 2D par segment permet éventuellement de s'adapter à cette reconfiguration si les gains du correcteur 122 sont réglés de sorte que le recalage du modèle soit rapide, mais cela peut poser d'autres difficultés.

Le prélèvement d'air est effectué sur le flux primaire. L'air prélevé peut être utilisé par l'avion (par exemple pour réaliser la pressurisation de la cabine...). Il peut aussi être rejeté dans le flux secondaire (VBV pour Variable Bleed Valve, TBV pour Turbine Bypass Valve), le but étant alors de diminuer la pression en aval du compresseur pour éviter un pompage. En fonction du volume d'air demandé par l'avion et du volume rejeté dans le flux secondaire pour des raisons de régulation moteur, on peut alors définir des niveaux de prélèvements d'air. Ces niveaux de prélèvement ont un impact sur la corrélation régime/Ps3 puisqu'en fonction du niveau d'air prélevé, on peut avoir des pressions différentes pour un même régime moteur. Il devient alors difficile de définir un modèle de régulation de Ps3 en fonction du régime. La solution développée dans les différents modes de réalisation pour répondre à ce problème est de définir plusieurs modèles, chaque modèle correspondant à un niveau donné de prélèvement d'air. On demande par la suite au correcteur de changer de modèle en fonction du niveau de prélèvement d'air actif à l'instant donné.

Toujours dans l'exemple de la pression Ps3, pour s'affranchir du problème des prélèvements d'air, un modèle de Ps3/P25 qui dépend non plus seulement de PCN25R, mais de PCN12R également, est alors implémenté : on définit alors mod_Ps3/P25(PCN25R, PCN12R). Lors de l'activation des prélèvements, la loi reliant PCN25R et PCN12R est modifiée, ce qui nous permet de rendre compte de la reconfiguration du système. Le recalage de cette loi nécessite donc un nouveau correcteur « 3D ».

### Recalage point par point

La première solution, non illustrée, consiste à rendre compte de la correction en fixant les coordonnées d'un seul point du rectangle, par exemple un des sommets A, B, C ou D du rectangle et en modifiant les coordonnées de deux points du rectangle, par exemple deux des sommets A, B, C ou D. Alternativement, on peut fixer deux points fixant les coordonnées de deux points du rectangle, par exemple deux des sommets A, B, C ou D du rectangle et en modifiant les coordonnées de un point du rectangle, par exemple deux des sommets A, B, C ou D.

Les points concernés sont déplacés pendant la sous-étape E331 puis l'étape d'interpolation E332 sur l'ensemble du rectangle est mise en oeuvre. Comme on travaille sur trois points à chaque fois, on est assuré de l'existence du rectangle interpolé.

### Recalage pondéré

Pour permettre un recalage pondéré, pour lequel aucun point n'est fixe, le modèle mod_PARAM est linéarisée en découpant le rectangle ABCD en triangles ABC, ABD, typiquement deux triangles complémentaires (figure 8). En effet, trois points A, B, C sont toujours coplanaires, avant et après recalage, ce qui assure de l'existence de l'interpolation du triangle recalé à la sous-étape d'interpolation E332, une fois la sous-étape E331 de recalage des trois points effectuée. Les trois nouveaux points issus de la correction peuvent ainsi être utilisés pour décrire l'équation cartésienne d'un plan, nous permettant ainsi d'interpoler linéairement le modèle mod_PARAM.

En effet, si une correction pondérée sur trois points de la surface était appliquée sur quatre points, par exemple les quatre sommets ABCD du rectangle, il y aurait une déformation du rectangle si les quatre points du rectangle n'étaient plus coplanaires (impossible d'interpoler les coordonnées du paramètre PARAM grâce à l'équation cartésienne d'un plan).

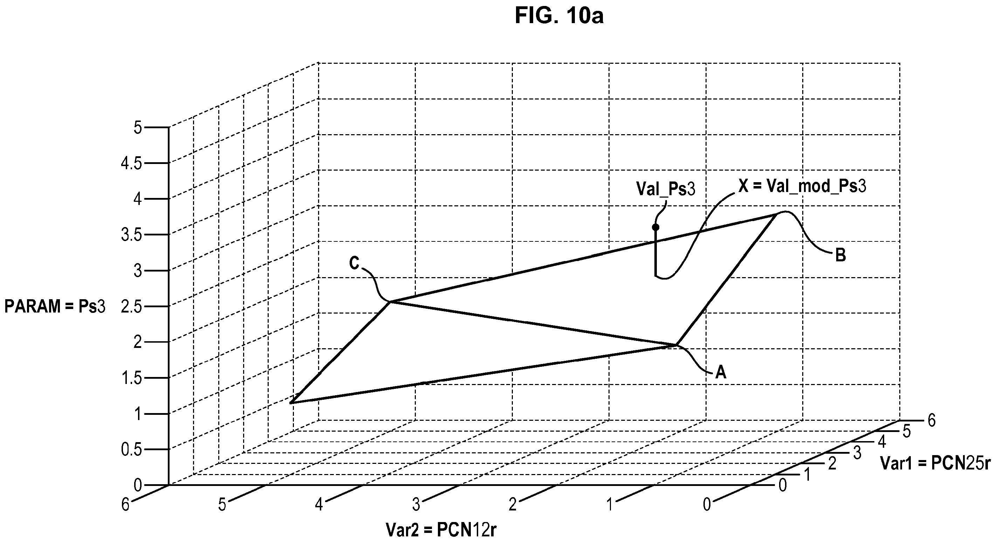

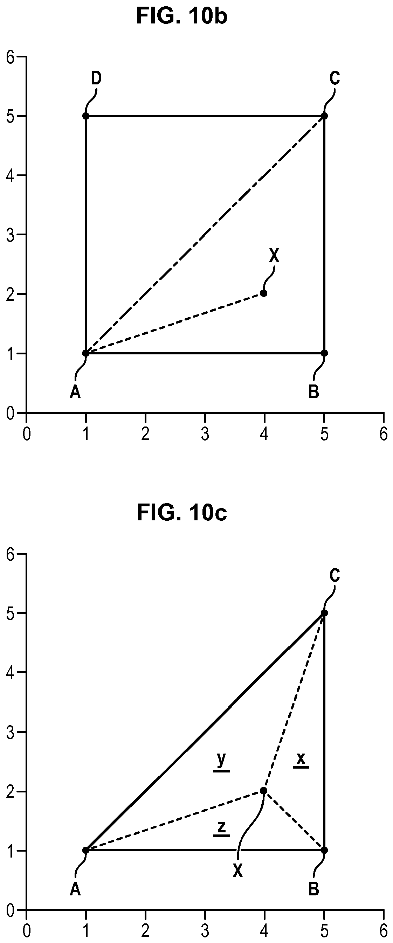

Dans la sous-étape E331, il s'agit de d'abord de sélectionner le triangle à recaler en fonction de la valeur de Val_PARAM (appelé point X) obtenue par les étapes E1 et E2. Pour cela une différence de pente entre le segment AC qui divise le rectangle en deux et le segment AX **(****figure 10b****).** On peut utiliser n'importe quel sommet B, C ou D.

En effet, avec les quatre points A, B, C, D formant un rectangle et le point X correspondant au point mesuré Val_PARAM, il faut déterminer si X appartient au triangle ABC ou au triangle ACD (on rappelle que ces triangles ont été choisis de manière arbitraire par rapport à ABD et DBC).

Pour cela, une comparaison des valeurs des taux de variation ΔAC, ΔAX des droites (AC) et (AX) est effectuée lors de la sous-étape E331. En effet si ΔAX > ΔAC alors ACD est sélectionné et si ΔAX ≤ ΔAC alors ABC est sélectionné. Ensuite, il s'agit de distribuer la correction.

Contrairement au modèle 2D avec segments, les distances entre le point X et les points du triangle ABC ne rendent pas compte de la répartition de la correction à appliquer. La distribution est donc faite au prorata des aires des triangles XAB, XAC et XBC **(****figure 10c****,** où x est l'aire de XBC, y l'aire de AXC et z l'aire de XAB).

On définit les ratios corr_A, corr_B, corr_C par corr_a=x/(x+y+z), corr_b=y/(x+y+z), et corr_z=z/(x+y+z).

Le ratio corr_A est appliqué au recalage du point A, corr_B à celui du point B et corr_C à celui du point D.

Enfin, la sous-étape d'interpolation E332 est mise en oeuvre à partir des trois points recalés par une simple équation cartésienne de plan, pour interpoler l'ensemble du triangle.

### Modèle segment (2D) matriciel

Il a été dit que le modèle segment 2D avait des limitations, notamment lorsqu'une autre variable pouvait avoir une influence forte sur le modèle mod_PARAM.

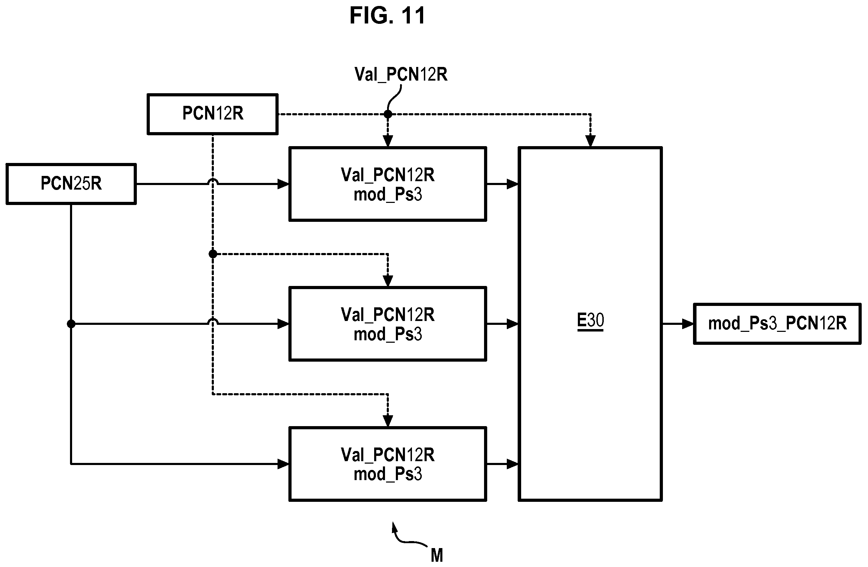

Illustrée en **figure 11****,** une autre solution pour tenir compte d'une autre variable consiste à stocker dans la mémoire 120 une matrice M de modèle mod_PARAM 2D. Au lieu d'avoir un modèle sous la forme mod_PARAM(Var1, Var 2), on a un modèle sous la forme mod_PARAM_Var2(Var1), où mod_PARAM_Var2 désigne un modèle applicable pour une valeur donnée (ou un ensemble de valeurs données) de la variable Var2.

La **figure 11** illustre mod_Ps3_PCN12R(PCN25R). Ici, PCN12R ne symbolise pas forcément une valeur exacte de la variable mais un niveau, qui peut être un intervalle ou être discret.

Dans le cas de la pression Ps3 où le paramètre PARAM est Ps3/P25 et où la variable Var1 est PCN25R, la mémoire 120 peut stocker une pluralité de modèle mod_Ps3 en fonction des prélèvements, c'est-à-dire de PCN12R.

Dans ce mode de réalisation, il y a un nombre limité de modèles stockés. Par conséquent, les valeurs de PCN12R peuvent être exprimées par un certain nombre de niveaux de prélèvement d'air avion.

Par conséquent, avant l'étape E31 décrite précédemment, le modèle mod_PARAM_Var2 est choisi dans une étape E30, en fonction de la valeur de la variable Var2, puis le modèle mod_PARAM_Var2 est recalé comme un modèle 2D lors des étapes E31, E32 et E33. Parallèlement à l'étape E1, on a une étape de mesure ou d'acquisition de la variable Var2 qui détermine le choix du modèle mod_PARAM_Var2

### Réglage de la dynamique des correcteurs

Le réglage de la dynamique du correcteur 2D est réalisé en prenant en compte deux besoins antinomiques :
- la dynamique doit être suffisamment lente pour que les cas connus de dérives d'une des voies d'acquisitions V10, V20 n'amènent pas le modèle à dériver en suivant la moyenne des voies V10, V20 (pour que l'on puisse voter pour l'une des deux voies au moment où la panne d'écart se lève),
- la dynamique doit être suffisamment rapide pour que les plages de régimes concernées soient tout de même recalées (notamment les régimes parcourus jusqu'au régime de décollage ou *«take-off»* dans la terminologie anglo-saxonne, lors du décollage)..

Comme nous disposons d'un correcteur 122 par segment de modèle 2D ou par plan de modèle 3D, il est possible d'effectuer un réglage des correcteurs (essentiellement du correcteur intégrateur d'ailleurs) indépendamment les uns des autres :
- une dynamique rapide sera alors appliquée sur les plages de régimes parcourues rapidement lors d'une mission classique. Cela permet de répondre à la contrainte de recalage en très peu de temps de ces plages de régime,
- une dynamique lente sera appliquée sur les plages de régimes sur lesquels le temps de recalage n'est pas une contrainte forte (exemples : ralenti sol, croisière, montée). Dans le cas de la pression Ps3, cela permet de se prémunir au mieux des risques de recalage sur la moyenne des voies Ps3 en cas de dérive de l'une des deux sur ces plages de régime.

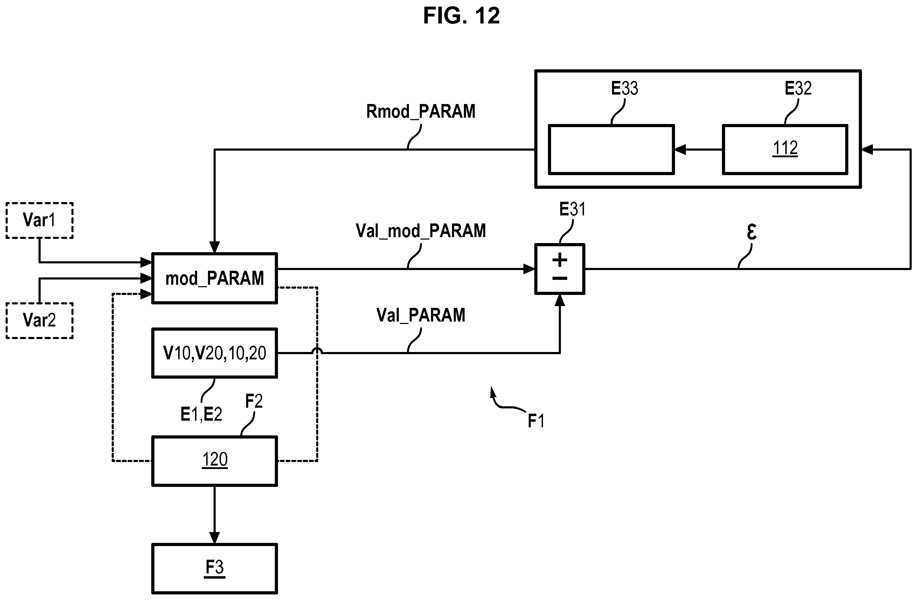

Dans un troisième temps, on va décrire un procédé d'analyse de vieillissement de turbomachine, comme illustré en **figure 12****.** On reprend l'exemple avec la pression Ps3 et les modèles recalages précédent, mais le principe est applicable de la même façon à tout procédé de recalage permettant de générer un modèle recalé Rmod_PARAM.

A chaque recalage, l'étape E3 est mise en œuvre et un modèle « recalé » mod_PARAM (mod_Ps3, mod_Ps3/P25, etc.) est généré. Lorsque le but de ce recalage est de permettre un arbitrage plus efficace, le modèle recalé mod_Ps3/P25 vient remplacer le modèle mod_Ps3/P25 précédemment qui devient de fait caduc. A cet égard, un écrasement peut être effectué dans la mémoire 120.

Toutefois, comme chaque modèle mod_Ps3/P25 diffère du modèle précédent (sur quelques segments ou quelques plans, au minium), il est possible d'observer, de proche en proche, l'évolution globale du modèle mod_Ps3/P25 en comparant l'intégralité (ou un certain nombre) de modèles recalés.

Ainsi, les différents procédés de recalage décrits précédemment sont avantageusement mis en œuvre dans un procédé de mesure de vieillissement de turbomachine.

Le procédé d'analyse de turbomachine comprend ainsi une étape F1 de mise en œuvre d'un procédé de recalage comprenant les étapes E1, E2, E3, E4 et une étape F2 de stockage du modèle mod_PARAM recalé dans une mémoire, qui peut être la mémoire 120. A la différence de l'étape E4, qui peut impliquer une suppression du modèle précédent, l'étape F2 implique une sauvegarde définitive (c'est-à-dire une sauvegarde non transitoire) du modèle mod_PARAM.

Les étapes F1 et F2 sont répétées au moins deux fois et préférentiellement un grand nombre de fois.

On notera notamment que le comportement d'un compresseur peut être dégradé de manière différente en fonction de son environnement (froid, sable, etc) ou d'évènements impromptus (ingestion d'un oiseau provoquant un pompage ou un léger endommagement des aubes). Le recalage permet au modèle de « vieillir » avec son moteur. Il faut donc qu'il puisse se recaler sur une ou deux missions, mais pas qu'il soit sensible à des variations de Ps3 sur quelques secondes.

Comme il s'agit d'analyser la turbomachine, c'est-à-dire de voir son évolution dans le temps, il est préférable que la mémoire 120 stocke des modèles mod_PARAM corrigés générés à des intervalles de temps supérieur au jour, voire au mois ou trimestre ou semestre.

Une fois toutes ces données acquises, une étape F3 de comparaison est mise en œuvre par le processeur 110 pour comparer les différents modèles recalés mod_PARAM. Cette comparaison permet de déduire l'état de la turbomachine.

Dans le cas de la pression Ps3 par exemple, à même PCN25R, un compresseur HP « jeune » aura une Ps3 plus élevée qu'un compresseur HP « vieux ». La dégradation du taux de compression se traduit donc par l'abaissement de la Ps3 à PCN25R donné. La comparaison des modèles permet donc de déduire une évolution de l'état du moteur.

L'étape F3 peut être effectuée par l'unité de calcul 100 directement, de sorte que l'état de la turbomachine ou de l'aéronef soit connu dès qu'un opérateur le requiert. Alternativement, cette étape F3 est faite en bureau d'étude, après récupération des données. De la même façon, l'étape F2 peut être faite à l'aide de la mémoire 120 de l'unité de calcul, mais les modèles recalés Rmod_PARAM peuvent aussi être transmis vers une mémoire externe à l'aéronef ou à la turbomachine, notamment dans un bureau d'étude, pour ensuite mettre en œuvre l'état F3.

Par exemple, on peut établir une analyse du vieillissement du compresseur haute-pression grâce à l'évolution du modèle mod_Ps3/P25(PCNR25R). Comme le rendement du compresseur diminue avec le temps, le suivi des modèles mod_Ps3/P25(PCNR25R) permet d'avoir de manière continue une information reflétant le compresseur actuel.

## Revendications

1. Procédé de recalage d'un modèle thermodynamique de paramètre de fonctionnement et d'analyse de vieillissement de turbomachine (1) ou d'aéronef, le modèle étant utilisé pour arbitrer entre deux voies d'acquisition (V10, V20) du paramètre de fonctionnement, les deux voies d'acquisition (V10, V20) faisant intervenir deux capteurs (10, 20),
le procédé utilisant un modèle stocké dans une mémoire (120), le modèle exprimant la pression statique en amont de la chambre de combustion dans une turbomachine comprenant un compresseur (3) en fonction au moins d'un paramètre du compresseur (3) et le paramètre de fonctionnement étant une pression statique en amont de la chambre de combustion (Ps3), le modèle étant défini par :
- au moins un segment, le modèle indiquant la valeur dudit paramètre de fonctionnement en fonction d'une variable, le modèle étant affine sur chaque segment, ou
- au moins un plan, le modèle indiquant la valeur dudit paramètre en fonction de deux variables, le modèle étant affine sur chaque plan,
le procédé comportant les étapes suivantes :
- F1 : Mise en œuvre d'un recalage selon les sous-étapes suivantes :
E1 : mesure d'une valeur du paramètre de fonctionnement, par un des deux capteurs (10, 20),
E2 : recalage du modèle à l'aide de la mesure de la valeur du paramètre de fonctionnement, l'étape de recalage comprenant les sous-étapes suivantes :
E31 : calcul d'une erreur (ε) par comparaison de ladite valeur du paramètre de fonctionnement avec la valeur correspondante du modèle, ladite valeur du modèle appartenant, si le modèle est défini par au moins un segment, à un des segments du modèle ou, si le modèle est défini par au moins un plan, à un des plans du modèle,
E32 : calcul d'une correction (corr) par minimisation de ladite erreur (ε) au moyen d'un correcteur (112), la correction (corr) étant un écart susceptible d'être appliqué sur des coordonnées de points du modèle pour déplacer lesdits points,
E33 : recalage, si le modèle est défini par au moins un segment, du segment du modèle ou, si le modèle est défini par au moins un plan, du plan du modèle à l'aide de la correction (corr), pour repositionner ledit segment ou plan et obtenir ainsi un modèle recalé du paramètre de fonctionnement, l'étape E33 comprenant les sous-étapes suivantes :
E331 : déplacement de, si le modèle est défini par au moins un segment, deux points du modèle, ou, si le modèle est défini par au moins un plan, trois points du modèle,
E332 : interpolation du modèle entre les points déplacés
- F2 : Sauvegarde du modèle recalé dans une mémoire non-volatile (120), les étapes F1 et F2 étant répétées au moins deux fois,
- F3 : Comparaison des différents modèles recalés pour en déduire une évolution de l'état de la turbomachine ou de l'aéronef.

2. Procédé selon la revendication 1, dans lequel le modèle est un modèle de la pression statique en amont de la chambre de combustion sur la pression de compresseur (3).

3. Procédé selon la revendication 1 ou 2, dans lequel le modèle est exprimé en fonction du régime de compresseur (3), réduit sur la température dudit compresseur (3).

4. Procédé selon la revendication 3, dans lequel le recalage est effectué sur le modèle en fonction du régime de compresseur (3), réduit sur la température dudit compresseur (3).

5. Procédé selon l'une quelconque des revendications 1 à 4, dans lequel le compresseur est un compresseur haute-pression, lorsque la turbomachine (1) comprend en outre un compresseur basse-pression (2) en amont du compresseur haute-pression (2).

6. Procédé selon l'une quelconque des revendications 1 à 5, dans lequel sur chaque segment ou sur chaque plan, le modèle est linéaire.

7. Procédé selon l'une quelconque des revendications 1 à 6, dans lequel l'étape de recalage par segment ou par plan est effectuée à l'aide d'un correcteur, par exemple un correcteur intégral.

8. Procédé selon l'une quelconque des revendications 1 à 7 en combinaison avec la revendication 3, dans lequel le modèle est exprimé en outre en fonction du régime de compresseur basse-pression (2), réduit sur la température dudit compresseur basse-pression (2).

9. Procédé selon l'une quelconque des revendications 1 à 8, dans lequel le modèle est exprimé en outre en fonction de la pression totale extérieure.

10. Procédé selon l'une quelconque des revendications 1 à 9, dans lequel le modèle de à recaler est choisi en fonction du niveau de prélèvement d'air avion dans les compresseurs et la mémoire (120) stocke une pluralité de modèles exprimés en fonction du prélèvement d'air avion.

11. Procédé selon la revendication 1, dans lequel l'étape d'obtention de la valeur du paramètre de fonctionnement se fait par :
- une mesure directe dudit paramètre de fonctionnement à l'aide d'un capteur (10, 20), ou
- une mesure d'un paramètre tiers dont dépend ledit paramètre de fonctionnement, ou
- une simulation.

12. Procédé selon la revendication 1 ou 11, dans lequel le correcteur (112) est un correcteur PID ou un correcteur intégral.

13. Procédé selon l'une quelconque des revendications 1 ou 11 à 12 dans lequel, lorsque le modèle est défini par au moins un segment, le recalage se fait en figeant un point du segment (A, B) et en déplaçant un autre point du segment (A, B) à l'aide de la correction (corr), les deux points (A, B) étant préférablement des extrémités du segment.

14. Procédé selon l'une quelconque des revendications 1 ou 11 à 13 dans lequel, lorsque le modèle est défini par au moins un segment, le recalage se fait en ne gardant aucun point du segment fixe, par exemple en déplaçant les deux extrémités (A, B) du segment à l'aide de la correction (corr).

15. Procédé selon la revendication 14, dans lequel le déplacement des extrémités du segment (A, B) se fait en fonction de leur distance respective avec ladite valeur correspondante du modèle.

16. Procédé selon la revendication 14 ou 15, dans lequel la répartition de la correction (corr) à appliquer une extrémité du segment (A, B) est égal au ratio de la distance de la valeur correspondante du modèle à l'autre extrémité du segment (B, A), sur la longueur du segment (AB).

17. Procédé selon l'une quelconque des revendications 13 à 16 dans lequel l'étape de recalage du segment du modèle comprend une interpolation linéaire entre deux points recalés.

18. Procédé selon l'une quelconque des revendications 1 ou 11 à 12, dans lequel, lorsque le modèle est défini par au moins un plan, le plan a la forme d'un rectangle (ABCD) qui est découpé en triangles (ABC, ABD), et le recalage se fait en figeant un ou deux sommets du triangle et en déplaçant les deux derniers ou le dernier sommet du triangle à l'aide de la correction (corr).

19. Procédé selon l'une quelconque des revendications 1 ou 11 à 12, dans lequel, lorsque le modèle est défini par au moins un plan, le plan est découpé en triangles, et le recalage se fait en déplaçant les trois sommets du triangle (A, B, C).

20. Procédé selon la revendication 19, dans lequel le déplacement de chaque sommet (A, B, C) du triangle se fait en fonction de l'aire du sous-triangle (XBC, XAC, XAB) défini par les deux autres sommets (BC, AC, AB) et ladite valeur correspondant du modèle.

21. Procédé selon la revendication 20, dans lequel la répartition de la correction (corr) à appliquer à un sommet du triangle est égal au ratio de l'aire du sous-triangle défini par les autres sommets et ladite valeur correspondante du modèle, sur l'aire du triangle (ABC).

22. Procédé selon l'une quelconque des revendications 18 à 21, dans lequel l'étape de recalage du triangle comprend une interpolation linéaire à partir des points recalés (ABC).

23. Procédé selon l'une quelconque des revendications 1 ou 11 à 22, dans lequel le paramètre est la pression statique en amont de la chambre de combustion ou la pression statique en amont de la chambre de combustion sur la pression de compresseur (3)et dans lequel
- la variable est, lorsque le modèle est défini par au moins un segment, le régime de compresseur (3), réduit sur la température dudit compresseur (3) et
- les variables sont, lorsque le modèle est défini par au moins un plan, le régime du compresseur haute pression (3), réduit sur la température dudit compresseur haute pression (3) et le régime de compresseur basse-pression (2), réduit sur la température dudit compresseur basse pression (2) , ou le régime du compresseur haute pression (3), réduit sur la température dudit compresseur haute pression (3) et la pression totale extérieure.

24. Procédé selon l'une quelconque des revendications 1 ou 11 à 23, dans lequel le modèle à recaler est choisi en fonction d'une variable, la mémoire (120) stocke une pluralité de modèles exprimés en fonction du prélèvement d'air avion, la variable pouvant être le niveau de prélèvement d'air avion dans les compresseurs.

25. Procédé selon l'une quelconque des revendications 1 ou 11 à 24, dans lequel les gains du correcteur sont différents pour différents segments ou plans du modèle.

## Patentansprüche

1. Verfahren zum Neueinstellen eines thermodynamischen Modells von Betriebsparametern und einer Alterungsanalyse eines Turbinentriebwerks (1) oder Luftfahrzeugs, wobei das Modell dazu verwendet wird, zwischen zwei Wegen (V10, V20) zum Erfassen des Betriebsparameters zu entscheiden, wobei die beiden Erfassungswege (V10, V20) zwei Sensoren (10, 20) einschalten,
wobei das Verfahren ein Modell verwendet, das in einem Speicher (120) gespeichert ist, wobei das Modell den statischen Druck stromaufwärts von der Brennkammer in einem Turbinentriebwerk, das einen Verdichter (3) umfasst, in Abhängigkeit von mindestens einem Parameter des Verdichters (3) ausdrückt, und wobei der Betriebsparameter ein statischer Druck stromaufwärts von der Brennkammer (Ps3) ist, wobei das Modell definiert wird durch:
- mindestens ein Segment, wobei das Modell den Wert des Betriebsparameters in Abhängigkeit von einer Variablen angibt, wobei das Modell auf jedem Segment affin ist, oder
- mindestens eine Ebene, wobei das Modell den Wert des Parameters in Abhängigkeit von zwei Variablen angibt, wobei das Modell auf jeder Ebene affin ist,
wobei das Verfahren die folgenden Schritte umfasst:
- F1: Umsetzen einer Neueinstellung gemäß den folgenden Teilschritten:
E1: Messen eines Wertes des Betriebsparameters durch einen der beiden Sensoren (10, 20),
E2: Neueinstellen des Modells anhand der Messung des Wertes des Betriebsparameters, wobei der Schritt des Neueinstellens folgende Teilschritte umfasst:
E31: Berechnen eines Fehlers (ε) durch Vergleichen des Wertes des Betriebsparameters mit dem entsprechenden Wert des Modells, wobei der Wert des Modells, falls das Modell durch mindestens ein Segment definiert wird, zu einem der Segmente des Modells gehört, oder falls das Modell durch mindestens eine Ebene definiert wird, zu einer der Ebenen des Modells gehört,
E32: Berechnen einer Korrektur (corr) durch Minimieren des Fehlers (ε) mittels einer Korrekturvorrichtung (112), wobei die Korrektur (corr) eine Abweichung ist, die auf Punktkoordinaten des Modells anwendbar ist, um die Punkte zu verschieben,
E33: Neueinstellen, falls das Modell durch mindestens ein Segment definiert wird, des Segments des Modells, oder falls das Modell durch mindestens eine Ebene definiert wird, der Ebene des Modells anhand der Korrektur (corr), um das Segment oder die Ebene neu zu positionieren und somit ein neu eingestelltes Modell des Betriebsparameters zu erzielen, wobei Schritt E33 die folgenden Teilschritte umfasst:
E331: Verschieben, falls das Modell durch mindestens ein Segment definiert wird, von zwei Punkten des Modells, oder falls das Modell durch mindestens eine Ebene definiert wird, von drei Punkten des Modells,
E332: Interpolieren des Modells zwischen den verschobenen Punkten,
- F2: Speichern des neu eingestellten Modells in einem nicht flüchtigen Speicher (120), wobei die Schritte F1 und F2 mindestens zweimal wiederholt werden,
- F3: Vergleichen der verschiedenen neu eingestellten Modelle, um daraus eine Entwicklung des Zustands des Turbinentriebwerks oder des Luftfahrzeugs abzuleiten.

2. Verfahren nach Anspruch 1, wobei das Modell ein Modell des statischen Drucks stromaufwärts von der Brennkammer im Verhältnis zu dem Verdichterdruck (3) ist.

3. Verfahren nach Anspruch 1 oder 2, wobei das Modell in Abhängigkeit von der Betriebsart des Verdichters (3), reduziert im Verhältnis zur Temperatur des Verdichters (3), ausgedrückt wird.

4. Verfahren nach Anspruch 3, wobei das Neueinstellen an dem Modell in Abhängigkeit von der Betriebsart des Verdichters (3), reduziert im Verhältnis zur Temperatur des Verdichters (3), ausgeführt wird.

5. Verfahren nach einem der Ansprüche 1 bis 4, wobei der Verdichter ein Hochdruck-Verdichter ist, wenn das Turbinentriebwerk (1) ferner einen Niederdruck-Verdichter (2) stromaufwärts von dem Hochdruck-Verdichter (2) umfasst.

6. Verfahren nach einem der Ansprüche 1 bis 5, wobei das Modell auf jedem Segment oder auf jeder Ebene linear ist.

7. Verfahren nach einem der Ansprüche 1 bis 6, wobei der Schritt des Neueinstellens pro Segment oder pro Ebene anhand einer Korrekturvorrichtung, zum Beispiel einer integralen Korrekturvorrichtung, ausgeführt wird.

8. Verfahren nach einem der Ansprüche 1 bis 7 kombiniert mit Anspruch 3, wobei das Modell ferner in Abhängigkeit von der Betriebsart des Niederdruck-Verdichters (2), reduziert im Verhältnis zur Temperatur des Niederdruck-Verdichters (2), ausgedrückt wird.

9. Verfahren nach einem der Ansprüche 1 bis 8, wobei das Modell ferner in Abhängigkeit von dem Gesamtaußendruck ausgedrückt wird.

10. Verfahren nach einem der Ansprüche 1 bis 9, wobei das neu einzustellende Modell in Abhängigkeit von dem Niveau der Flugzeugluftabnahme in den Verdichtern gewählt wird, und der Speicher (120) eine Vielzahl von Modellen speichert, die in Abhängigkeit von der Flugzeugluftabnahme ausgedrückt werden.

11. Verfahren nach Anspruch 1, wobei der Schritt des Erzielen des Wertes des Betriebsparameters erfolgt durch:
- eine direkte Messung des Betriebsparameters anhand eines Sensors (10, 20), oder
- eine Messung eines Drittparameters, von dem der Betriebsparameter abhängt, oder
- eine Simulation.

12. Verfahren nach Anspruch 1 oder 11, wobei die Korrekturvorrichtung (112) eine PID-Korrekturvorrichtung oder eine integrale Korrekturvorrichtung ist.

13. Verfahren nach einem der Ansprüche 1 oder 11 bis 12, wobei, wenn das Modell durch mindestens ein Segment definiert wird, das Neueinstellen erfolgt, indem ein Punkt des Segments (A, B) fixiert wird und indem ein anderer Punkt des Segments (A, B) anhand der Korrektur (corr) verschoben wird, wobei die beiden Punkte (A, B) bevorzugt die Enden des Segments sind.

14. Verfahren nach einem der Ansprüche 1 oder 11 bis 13, wobei, wenn das Modell durch mindestens ein Segment definiert wird, das Neueinstellen dadurch erfolgt, dass kein Punkt des feststehenden Segments behalten wird, zum Beispiel indem die beiden Enden (A, B) des Segments anhand der Korrektur (corr) verschoben werden.

15. Verfahren nach Anspruch 14, wobei das Verschieben der Enden des Segments (A, B) in Abhängigkeit von ihrem jeweiligen Abstand zu dem entsprechenden Wert des Modells erfolgt.

16. Verfahren nach Anspruch 14 oder 15, wobei die Verteilung der Korrektur (corr), die auf ein Ende des Segments (A, B) anzuwenden ist, gleich dem Verhältnis des Abstands des entsprechenden Wertes des Modells zu dem anderen Ende des Segments (B, A) zu der Länge des Segments (AB) ist.

17. Verfahren nach einem der Ansprüche 13 bis 16, wobei der Schritt des Neueinstellens des Segments des Modells eine lineare Interpolation zwischen zwei neu eingestellten Punkten umfasst.

18. Verfahren nach einem der Ansprüche 1 oder 11 bis 12, wobei, wenn das Modell durch mindestens eine Ebene definiert wird, die Ebene die Form eines Rechtecks (ABCD) aufweist, das in Dreiecke (ABC, ABD) zerlegt wird, und das Neueinstellen dadurch erfolgt, dass ein oder zwei Spitzen des Dreiecks fixiert werden und die beiden letzen oder die letzte Spitze des Dreiecks anhand der Korrektur (corr) verschoben werden/wird.

19. Verfahren nach einem der Ansprüche 1 oder 11 bis 12, wobei, wenn das Modell durch mindestens eine Ebene definiert wird, die Ebene in Dreiecke zerlegt wird, und das Neueinstellen erfolgt, indem die drei Spitzen des Dreiecks (A, B, C) verschoben werden.

20. Verfahren nach Anspruch 19, wobei das Verschieben jeder Spitze (A, B, C) des Dreiecks in Abhängigkeit von der Fläche des Teildreiecks (XBC, XAC, XAB), die durch die beiden anderen Spitzen (BC, AC, AB) und den entsprechenden Wert des Modells definiert wird, erfolgt.

21. Verfahren nach Anspruch 20, wobei die Verteilung der Korrektur (corr), die auf eine Spitze des Dreiecks anzuwenden ist, gleich dem Verhältnis der Fläche des Teildreiecks, die durch die anderen Spitzen und den entsprechenden Wert des Modells definiert wird, zu der Fläche des Dreiecks (ABC) ist.

22. Verfahren nach einem der Ansprüche 18 bis 21, wobei der Schritt des Neueinstellens des Dreiecks eine lineare Interpolation aus den neu eingestellten Punkten (ABC) umfasst.

23. Verfahren nach einem der Ansprüche 1 oder 11 bis 22, wobei der Parameter der statische Druck stromaufwärts von der Brennkammer oder der statische Druck stromaufwärts von der Brennkammer im Verhältnis zum Verdichterdruck (3) ist, und wobei
- die Variable, wenn das Modell durch mindestens ein Segment definiert wird, die Betriebsart des Verdichters (3), reduziert im Verhältnis zur Temperatur des Verdichters (3)ist, und
- die Variablen, wenn das Modell durch mindestens eine Ebene definiert wird, die Betriebsart des Hochdruck-Verdichters (3), reduziert im Verhältnis zur Temperatur des Hochdruck-Verdichters (3), und die Betriebsart des Niederdruck-Verdichters (2), reduziert im Verhältnis zur Temperatur des Niederdruck-Verdichters (2), oder die Betriebsart des Hochdruck-Verdichters (3), reduziert im Verhältnis zu der Temperatur des Hochdruck-Verdichters (3) und dem Gesamtaußendruck ist.

24. Verfahren nach einem der Ansprüche 1 oder 11 bis 23, wobei das neu einzustellende Modell in Abhängigkeit von einer Variablen gewählt wird, der Speicher (120) eine Vielzahl von Modellen speichert, die in Abhängigkeit von der Flugzeugluftabnahme ausgedrückt werden, wobei die Variable das Niveau der Flugzeugluftabnahme in den Verdichtern sein kann.

25. Verfahren nach einem der Ansprüche 1 oder 11 bis 24, wobei die Verstärkungsfaktoren der Korrekturvorrichtung für verschiedene Segmente oder Ebenen des Modells unterschiedlich sind.

## Claims

1. A method for the realignment of a thermodynamic model for the operating parameter and ageing analysis of a turbomachine (1) or aircraft, the model being used to arbitrate between two acquisition channels (V10, V20) for the operating parameter, the two acquisition channels (V10, V20) involving two sensors (10, 20), the method utilising a model stored in a memory (120), the model expressing the static pressure upstream of the combustion chamber in a turbomachine comprising a compressor (3) as a function of at least one parameter of the compressor (3), and the operating parameter being a static pressure upstream of the combustion chamber (Ps3), the model being defined by:
- at least one segment, the model indicating the value of said operating parameter as a function of a variable, the model being affine on each segment, or
- at least one plane, the model indicating the value of said operating parameter as a function of two variables, the model being affine on each plane,
the method comprising the following steps:
- F1: Performing a realignment in accordance with the following sub-steps:
E1: measuring a value of the operating parameter using one of the two sensors (10, 20),
E2: realigning the model using the measured value of the operating parameter, the realignment step comprising the following sub-steps:
E31: calculating an error (ε) by comparing said operating parameter value with the corresponding value in the model, said value in the model belonging, if the model is defined by at least one segment, to one of the segments of the model or, if the model is defined by at least one plane, to one of the planes of the model,
E32: calculating a correction (corr) by minimising said error (ε) by means of a corrector (112), the correction (corr) being a displacement that can be applied to the coordinates of points in the model to move said points,
E33: re-alignment, if the model is defined by at least one segment, of the model segment or, if the model is defined by at least one plane, of the model plane using the correction (corr), in order to reposition the said segment or plane and thereby obtain a model re-aligned with the operating parameter; step E33 comprising the following sub-steps:
E331: moving, if the model is defined by at least one segment, two points of the model, or, if the model is defined by at least one plane, three points of the model,
E332: interpolating the model between the displaced points
- F2: Saving the re-calibrated model to a non-volatile memory (120),
steps F1 and F2 being repeated at least twice,
- F3: Comparing the various re-aligned models to deduce a change in the state of the turbomachine or aircraft. .

2. A method according to claim 1, in which the model is a model of the static pressure upstream of the combustion chamber as a function of the compressor (3) pressure.

3. A method according to claim 1 or 2, wherein the model is expressed as a function of the compressor (3) speed, scaled to the temperature of said compressor (3).

4. A method according to claim 3, in which the realignment is carried out on the model as a function of the compressor (3) speed, scaled to the temperature of said compressor (3).

5. A method according to any one of claims 1 to 4, wherein the compressor is a high-pressure compressor, when the turbomachine (1) further comprises a low-pressure compressor (2) upstream of the high-pressure compressor (2).

6. A method according to any one of claims 1 to 5, in which, on each segment or on each plane, the model is linear.

7. A method according to any one of claims 1 to 6, in which the step of realignment by segment or by plane is carried out using a corrector, for example an integral corrector.

8. A method according to any one of claims 1 to 7 in combination with claim 3, wherein the model is further expressed as a function of the operating conditions of the low-pressure compressor (2), reduced to the temperature of said low-pressure compressor (2).

9. A method according to any one of claims 1 to 8, in which the model is further expressed as a function of the total external pressure.

10. A method according to any one of claims 1 to 9, wherein the model to be recalibrated is selected as a function of the level of aircraft air intake into the compressors, and the memory (120) stores a plurality of models expressed as a function of the aircraft air intake.

11. A method according to claim 1, in which the step of obtaining the value of the operating parameter is carried out by:
- a direct measurement of said operating parameter using a sensor (10, 20), or
- measuring a third parameter on which said operating parameter depends, or
- a simulation.

12. A method according to claim 1 or 11, wherein the controller (112) is a PID controller or an integral controller.

13. A method according to any one of claims 1 or 11 to 12, in which, when the model is defined by at least one segment, the realignment is carried out by fixing one point of the segment (A, B) and moving another point of the segment (A, B) using the correction (corr), the two points (A, B) preferably being the endpoints of the segment.

14. A method according to any one of claims 1 or 11 to 13, in which, when the model is defined by at least one segment, the re-alignment is carried out by not fixing any point on the segment, for example by moving both endpoints (A, B) of the segment using the correction (corr).

15. A method according to claim 14, in which the displacement of the ends of the segment (A, B) is determined as a function of their respective distances from the said corresponding value of the model.

16. A method according to claim 14 or 15, in which the distribution of the correction (corr) to be applied to one end of the segment (A, B) is equal to the ratio of the distance from the corresponding value of the model to the other end of the segment (B, A) to the length of the segment (AB).

17. A method according to any one of claims 13 to 16, in which the step of re-aligning the model segment comprises linear interpolation between two re-aligned points.

18. A method according to any one of claims 1 or 11 to 12, in which, when the model is defined by at least one plane, the plane has the shape of a rectangle (ABCD) which is divided into triangles (ABC, ABD), and the repositioning is carried out by fixing one or two vertices of the triangle and moving the remaining two or the remaining one vertex of the triangle using the correction (corr).

19. A method according to any one of claims 1 or 11 to 12, wherein, when the model is defined by at least one plane, the plane is divided into triangles, and the repositioning is carried out by moving the three vertices of the triangle (A, B, C).

20. A method according to claim 19, in which the displacement of each vertex (A, B, C) of the triangle is determined as a function of the area of the sub-triangle (XBC, XAC, XAB) defined by the other two vertices (BC, AC, AB) and the corresponding value of the model.

21. A method according to claim 20, wherein the distribution of the correction (corr) to be applied to a vertex of the triangle is equal to the ratio of the area of the sub-triangle defined by the other vertices and the corresponding value of the model to the area of the triangle (ABC).

22. A method according to any one of claims 18 to 21, wherein the step of re-calibrating the triangle comprises linear interpolation based on the re-calibrated points (ABC).

23. A method according to any one of claims 1 or 11 to 22, in which the parameter is the static pressure upstream of the combustion chamber or the static pressure upstream of the combustion chamber relative to the compressor (3) pressure, and in which
- the variable is, when the model is defined by at least one segment, the speed of the compressor (3), normalised to the temperature of said compressor (3), and
- the variables are, when the model is defined by at least one plane, the operating conditions of the high-pressure compressor (3), normalised to the temperature of said high-pressure compressor (3), and the operating conditions of the low-pressure compressor (2), normalised to the temperature of said low-pressure compressor (2), or the operating conditions of the high-pressure compressor (3), normalised to the temperature of said high-pressure compressor (3) and the total external pressure.

24. A method according to any one of claims 1 or 11 to 23, in which the model to be recalibrated is selected as a function of a variable, the memory (120) stores a plurality of models expressed as a function of the aircraft air intake, the variable being the level of aircraft air intake into the compressors.

25. A method according to any one of claims 1 or 11 to 24, wherein the corrector gains differ for different segments or planes of the model.
